# EUROPEAN PATENT SPECIFICATION

(11) **EP 3 024 055 B1**
(45) Date of publication and mention of the grant of the patent: **24.01.2018**
(21) Application number: 15195247.0
(22) Date of filing: 18.11.2015
(51) Int. Cl.: H01M 2/02, H01M 2/04, H01M 2/26, H01M 10/04, H01G 11/26, H01G 11/70, H01G 11/78, H01G 11/74

(54) **ELECTROCHEMICAL CELL AND METHOD OF MANUFACTURING ELECTROCHEMICAL CELL**
ELEKTROCHEMISCHE ZELLE UND VERFAHREN ZUR HERSTELLUNG EINER ELEKTROCHEMISCHEN ZELLE
CELLULE ÉLECTROCHIMIQUE ET PROCÉDÉ DE FABRICATION ASSOCIÉ

(30) Priority: 19.11.2014 JP 2014234784
(43) Date of publication of application: 25.05.2016
(73) Proprietor: Seiko Instruments Inc., Chiba-shi, Chiba (JP)
(72) Inventor: WATANABE, Shunji, Chiba-shi, Chiba (JP); TANAKA, Kazumi, Chiba-shi, Chiba (JP); TAMACHI, Tsuneaki, Chiba-shi, Chiba (JP)
(74) Representative: Miller Sturt Kenyon

(56) References cited:
- WO-A1-2014/072494
- US-A- 4 211 833
- US-A1- 2006 187 614
- US-A1- 2011 091 753
- US-A1- 2013 202 951
- US-B2- 7 348 102

## Description

### BACKGROUND OF THE INVENTION

### FIELD OF THE INVENTION

The present invention relates to an electrochemical cell and a method of manufacturing the electrochemical cell.

### BACKGROUND ART

As electrochemical cells such as a nonaqueous electrolyte secondary battery and an electric double layer capacitor, there has been hitherto known a structure including an electrode group formed by winding a positive electrode and a negative electrode formed in a sheet shape with a separator interposed therebetween, and an exterior body housing the electrode group. For example, in an electrochemical cell described in JP-A-2003-31266 (Patent Document 1), a positive electrode projecting portion of the positive electrode which projects to an overlapping portion between the positive electrode and the negative electrode is connected to a positive electrode container as an exterior body, and a negative-electrode projecting portion of the negative electrode which projects to the overlapping portion between positive electrode and the negative electrode is connected to a negative electrode container as the exterior body.

However, electrical connections between the positive electrode container/the negative electrode container and the positive electrode/the negative electrode are performed only through respective projecting portions in the structure of Patent Document 1, therefore, there is a problem that the electric reliability is low.

In response to the above, for example, JP-T-2012-517658 (Patent Document 2) discloses a structure in which tabs projecting from a positive electrode and a negative electrode are separately provided in the positive electrode and the negative electrode, and these tabs are connected to a positive electrode container and a negative electrode container respectively by welding or the like to thereby improve the electric reliability.

US 2011/091753 (Patent Document 3) relates to a rechargeable lithium ion button cell battery having a sealed housing comprising an inner casing and an outer casing, in which both casings have at least one flat area as top or bottom of the battery, and a round or oval side wall vertically formed to the flat area. The side walls are single wall not folded double walls. An insulation gasket is positioned between the side walls, and the outer casing opening is mechanically crimped to complete the seal of the battery. Inside the sealed housing, the anode & cathode electrodes are spiral wound with a separator to be a round or oval roll. The roll axis is vertical to the flat areas of the casings. The two electrodes are tapered in width and comprise current collectors of metal foils coated with lithium-intercalating active materials, leaving a small area of uncoated metal foils as welding tabs for connecting to the casings. The tabs are welded to the casings respectively, or for the tab of the electrode which connecting to the outer casing, are welded to an aluminum flake first and the flake is pressed on the outer casing by said gasket.

### SUMMARY OF THE INVENTION

However, it is necessary to provide the tabs separately with respect to the positive electrode and the negative electrode in the structure of Patent Document 2, which may cause a problem that the structure becomes complicated.

There are other problems such as the increase of manufacturing man-hours and the increase of manufacturing costs as connection work between respective containers and the tabs will be necessary.

The present invention has been made in view of the above circumstances, and an object thereof is to provide an electrochemical cell and a method of manufacturing the electrochemical cell capable of securing the electric reliability while realizing the simplification of the structure, the reduction of manufacturing man-hours and the cost reduction.

The present invention presents the following means for solving the above problems.

According to an embodiment of the present invention, there is provided an electrochemical cell as defined in claim 1.

According to the above structure, the first conductive material containing the carbon-based material is interposed between the positive electrode projecting portion and the positive electrode container, therefore, the electric reliability can be secured as well as high-rate charge/discharge characteristics can be improved as compared with a case where the positive electrode projecting portion and the positive electrode container are directly connected as in the related art.

Moreover, as the structure in which the first conductive material is merely interposed between the positive electrode projecting portion and the positive electrode container is adopted, the electric reliability can be secured while simplifying the structure as well as reducing manufacturing man-hours and manufacturing costs as compared with, for example, the structure in which a tab formed separately from the positive electrode is connected to the positive electrode container by welding and so on.

The first conductive material may be arranged on a contact surface of the positive electrode projecting portion with respect to the positive electrode container.

According to the above structure, the area in which the conductive material is formed can be reduced as compared with the case where the conductive material is formed in the entire area facing the electrode group in the positive electrode container, therefore, manufacturing costs can be further reduced.

The first conductive material may be arranged over the entire area of a surface in the positive electrode container, which faces the positive electrode projecting portion in the electrode group.

According to the above structure, the conductive material is formed in the entire area facing the electrode group in the positive electrode container, therefore, positional deviation of the electrode group with respect to the positive electrode container can be allowed as well as the electric reliability between the two can be secured.

Moreover, a second conductive material containing a carbon-based material may be interposed between the negative electrode projecting portion and the negative electrode container.

According to the structure, the second conductive material is also interposed between the negative electrode projecting portion and the negative electrode container, therefore, the electric reliability can be further secured.

The separator may include a lap portion overlapping with the positive electrode and the negative electrode, and a negative electrode covering portion which covers an end portion of the negative electrode positioned in the positive electrode projecting portion's side.

According to the structure, a short circuit between the positive electrode and the negative electrode can be positively suppressed. Particularly according to the structure of the present invention, a short circuit between the positive electrode projecting portion and the negative electrode occurring through the first conductive material can be suppressed at the time of a connection work between the positive electrode projecting portion and the first conductive material.

The separator may include a positive electrode covering portion which covers an end portion of the positive electrode in the negative electrode projecting portion's side.

According to the structure, the positive electrode covering portion which covers the end portion of the positive electrode positioned in the negative electrode projecting portion's side is included, therefore, a short circuit between the positive electrode and the negative electrode can be positively suppressed.

The negative electrode may include a negative electrode current collection sheet and a pair of negative electrode mixture layers applied to both surfaces of the negative electrode current collection sheet, in which the negative electrode current collection sheet and the negative electrode mixture layers may be arranged flush with each other in a contact surface of the negative electrode with respect to the negative electrode container.

As it is not necessary to provide a space for connecting a tab in the negative electrode current collection sheet, the negative electrode current collection sheet and the negative electrode mixture layers can be arranged flush with each other in the contact surface of the negative electrode with respect to the negative electrode container. Accordingly, the area of the negative electrode mixture layers can be secured and the area of the overlapping portion between the positive electrode and the negative electrode can be secured while keeping the capacity of the exterior body, therefore, volumetric efficiency can be improved. Additionally, the conductive auxiliary agent (for example, graphite and so on) contained in the negative electrode mixture layers also contacts the negative electrode container through the conductive material, therefore, a further better conductive state can be obtained.

According to an embodiment of the present invention, there is provided a method of manufacturing the electrochemical cell as defined in claim 8.

According to the structure, both the positioning of the electrode group with respect to the positive electrode container and the connection between the positive electrode projecting portion and the first conductive material can be realized at the same time, therefore, the electric reliability can be secured while reducing the manufacturing man-hours and the manufacturing costs.

According to an embodiment of the present invention, there is provided a method of manufacturing the electrochemical cell as defined in claim 9.

According to the structure, both the positioning of the electrode group with respect to the negative electrode container and the connection between the negative electrode projecting portion and the second conductive material can be realized at the same time, therefore, the electric reliability can be secured while reducing the manufacturing man-hours and the manufacturing costs.

According to the embodiments of the present invention, the electric reliability can be secured while simplifying the structure as well as reducing manufacturing man-hours and manufacturing costs.

### BRIEF DESCRIPTION OF THE DRAWINGS

Embodiments of the present invention will now be described by way of further example only and with reference to the accompanying drawings, in which:
Fig. 1 is a cross-sectional view of a secondary battery according to a first embodiment;
Fig. 2 is a process view for explaining a process of forming an electrode group in a method of manufacturing the secondary battery;
Fig. 3 is a process view for explaining a process of arranging a gasket in the method of manufacturing the secondary battery;
Fig. 4 is a process view for explaining an application process in the method of manufacturing the secondary battery;
Fig. 5 is a process view for explaining a setting process in the method of manufacturing the secondary battery;
Fig. 6 is a cross-sectional view of a secondary battery according to a second embodiment;
Fig. 7 is an explanatory view of a process of forming an electrode group and a cross-sectional view of a negative electrode and a separator;
Fig. 8 is a cross-sectional view of a secondary battery according to a third embodiment;
Fig. 9 is an explanatory view of a process of forming an electrode group and a cross-sectional view of a laminate (a positive electrode, a negative electrode and a separator);
Fig. 10 is a cross-sectional view of a secondary battery having another structure of the embodiment;
Fig. 11 is a cross-sectional view of a secondary battery having another structure of the embodiment;
Fig. 12 is a cross-sectional view of a secondary battery having another structure of the embodiment; and
Fig. 13 is a cross-sectional view of a secondary battery having another structure of the embodiment.

### DESCRIPTION OFTHE PREFERRED EMBODIMENTS

Hereinafter, embodiments of the present invention will be explained with reference to the drawings. In the following explanation, a lithium ion secondary battery (hereinafter referred to merely as a secondary battery) as one kind of nonaqueous electrolyte secondary batteries will be explained as an example of an electrochemical cell according to the present invention. In the drawings used in the following explanation, scales of respective members are approximately changed for facilitating the recognition of sizes of respective members.

### (First Embodiment)

### [Secondary Battery]

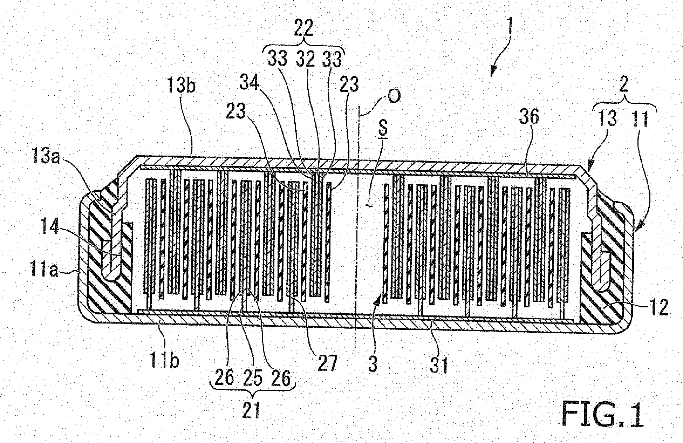

Fig. 1 is a cross-sectional view of a secondary battery 1 according to a first embodiment.

As shown in Fig. 1, the secondary battery 1 according to the embodiment is a so-called button-type secondary battery 1, which includes an exterior body 2 and an electrode group 3 housed inside the exterior body 2 with an electrolyte. The electrolyte is formed by dissolving a supporting salt in a nonaqueous solvent.

The exterior body 2 has a circular shape in plan view. Specifically, the exterior body 2 includes a bottomed cylindrical positive electrode container 11 and a capped cylindrical negative electrode container 13 assembled to the positive electrode container 11 through a gasket 12 and demarcating a housing space S between the negative electrode container 13 and the positive electrode container 11. In the shown example, respective central axis lines of the positive electrode container 11 and the negative electrode container 13 are positioned on a common axis. Hereinafter, the common axis is referred to as an axis line O, a side of the negative electrode container 13 extending along the axis line O is referred to as an upper side, a side of the positive electrode container 11 is referred to as a lower side, a direction orthogonal to the axis line O in plan view seen from the axis line O direction is referred to as a radial direction and a direction circling around the axis line O is referred to as a circumferential direction.

The positive electrode container 11 and the negative electrode container 13 are formed by drawing a plate material made of stainless steel and the like or by other methods. In the shown example, an inner diameter of the positive electrode container 11 is larger than an outer diameter of the negative electrode container 13.

The gasket 12 has an annular shape arranged coaxially with the axial line O and is fitted into a peripheral wall portion 11a of the positive electrode container 11. A groove portion 14 holding a peripheral wall portion 13a of the negative electrode container 13 is formed over the entire circumference in the gasket 12. Then, the negative electrode container 13 is fixed to the positive electrode container 11 by caulking the peripheral wall portion 11a of the positive electrode container 11 to the inside of the radial direction in a state where the peripheral wall portion 13a is held inside the groove portion 14 of the gasket 12. The gasket 12 is made of a material having insulation properties such as resin material (for example, polypropylene (PP)).

The electrode group 3 has a circular shape corresponding to the inner shape of the exterior body 2. The electrode group 3 is configured by winding a laminate including a sheet-like positive electrode 21, a negative electrode 22 and pairs of separators 23 arranged on both sides of the negative electrode 22, which is housed inside the housing space S in a state where a winding axis is coaxially arranged with the axis line O. Specifically, the electrode group 3 is configured so that the positive electrode 21 and the negative electrode 22 are shifted along a direction of the axis line O and wound in a state where the separators 23 are interposed in overlapping portions. Therefore, the electrode group 3 is configured so that the negative electrode 22, the separator 23 and the positive electrode 21 are arranged by turns in the radial direction in a vertical cross section along the direction of the axis line O. Note that a not-shown insulation tape surrounding the electrode group 3 from the outside in the radial direction is provided in an outer peripheral side of the electrode group 3.

The positive electrode 21 of the electrode group 3 includes a positive electrode current collection sheet 25, and a pair of positive electrode mixture layers 26 applied to both surfaces of the positive electrode current collection sheet 25. The positive electrode current collection sheet 25 has a wider width along the direction of the axis line O as compared with the positive electrode mixture layers 26, which forms a positive electrode projecting portion 27 projecting downward from the overlapping portion. A lower end surface (contact surface) of the positive electrode projecting portion 27 abuts on a bottom wall portion 11b of the positive electrode container 11 through a later-described conductive material 31.

As the positive electrode current collection sheet 25, for example, metal foil made of an aluminum alloy or pure aluminum is suitably used. The positive electrode mixture layer 26 is formed by mixing, for example, a positive electrode active material, a conductive auxiliary agent (for example, graphite and so on), a binder (for example, polyvinylindene fluoride and so on) and a solvent (for example, an arbitrary solvent such as N-methylpyrrolidone) and applying the mixture to the positive electrode current collection sheet 25 to be dried.

The negative electrode 22 of the electrode group 3 includes a negative electrode current collection sheet 32, and a pair of negative electrode mixture layers 33 applied to both surfaces of the negative electrode current collection sheet 32. The widths of the negative electrode current collection sheet 32 and the negative electrode mixture layers 33 along the direction of the axis line O are equal to each other, and both end surfaces in the direction of the axis line O are arranged flush with each other. The negative electrode 22 has a wider width along the direction of the axis line O as compared with the separator 23, projecting upward from the overlapping portion (refer to a negative electrode projecting portion 34 in the drawing). An upper end surface of the negative electrode projecting portion 34 abuts on a top wall portion 13b of the negative electrode container 13 through a later-described conductive material 36.

As the negative electrode current collection sheet 32, for example, metal foil made of a copper alloy, pure copper, nickel or the like is suitably used. The negative electrode mixture layer 33 is formed by mixing, for example, a negative electrode active material, a conductive auxiliary agent (for example, graphite and so on), a binder (for example, polyvinylindene fluoride and so on) and a solvent (for example, an arbitrary solvent such as N-methylpyrrolidone) and applying the mixture to the negative electrode current collection sheet 32 to be dried.

In the shown example, the separator 23 separates between the positive electrode 21 and the negative electrode 22 so that an upper end surface thereof is positioned in the same level as or in an upper level than an upper end surface of the positive electrode 21 and so that a lower end surface thereof is positioned in the same level as or in a lower level than a lower end surface of the negative electrode 22. In the electrode group 3, the portion where the positive electrode 21 and the negative electrode 22 overlap each other configures the overlapping portion.

As the separator 23, nonwoven fabric and so on made of glass such as alkali glass, borosilicate glass, quartz glass and lead glass, or resin materials such as polyphenylene sulfide (PPS), polyetheretherketone (PEEK), polyethylene terephthalate (PET), polyamide-imide (PAI), polyamide and polyimide (PI) can be used.

Here, the conductive material (first conductive material) 31 containing a carbon-based material is interposed between the bottom wall portion 11b of the positive electrode container 11 and the positive electrode projecting portion 27 of the positive electrode 21. The conductive material 31 has a film shape formed over substantially the entire surface (an area positioned inside the gasket 12) in an area facing the electrode group 3 in the direction of the axis line O in an upper surface (contact surface) of the bottom wall portion 11b of the positive electrode container 11. The positive electrode 21 of the electrode group 3 is electrically connected to the positive electrode container 11 through the conductive material 31.

On the other hand, the conductive material (second conductive material) 36 made of the material similar to the above conductive material 31 is arranged between the top wall portion 13b of the negative electrode container 13 and the negative electrode projecting portion 34 of the negative electrode 22. The conductive material 36 has a film shape formed over the substantially entire surface (substantially the entire surface of the top wall portion 13b) in an area facing the electrode group 3 in the direction of the axis line O in a lower surface of the top wall portion 13b of the negative electrode container 13. The negative electrodes 22 of the electrode group 3 are electrically connected to the negative electrode container 13 through the conductive material 36.

### [Method of Manufacturing Secondary Battery]

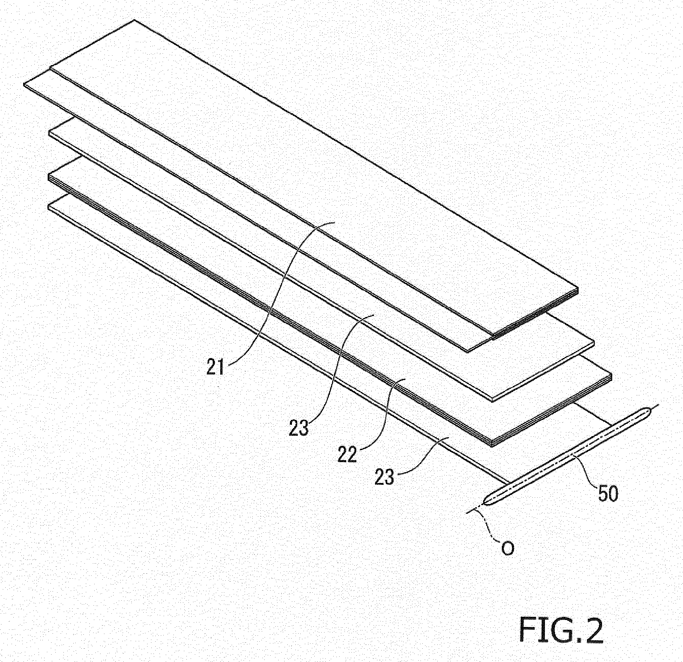

Next, a method of manufacturing the above secondary battery 1 will be explained. In the following explanation, a method of connecting respective projecting portions 27 and 34 to respective containers 11 and 13 respectively through the conductive materials 31 and 36 will be chiefly explained. Fig. 2 to Fig. 5 are process views for explaining the method of manufacturing the secondary battery 1.

First, the electrode group 3 is formed in advance (a process of forming the electrode group) as shown in Fig. 2. Specifically, a laminate in which the separator 23, the negative electrode 22, the separator 23 and the positive electrode 21 are stacked by turns is formed. In this case, the laminate is formed so that the positive electrode 21 and the negative electrode 22 are shifted in the direction of the axis line O and that the separators 23 are interposed in the overlapping portions of the positive electrode 21 and the negative electrode 23. After that, the laminate is wound around a winding core 50 to thereby complete the electrode group 3.

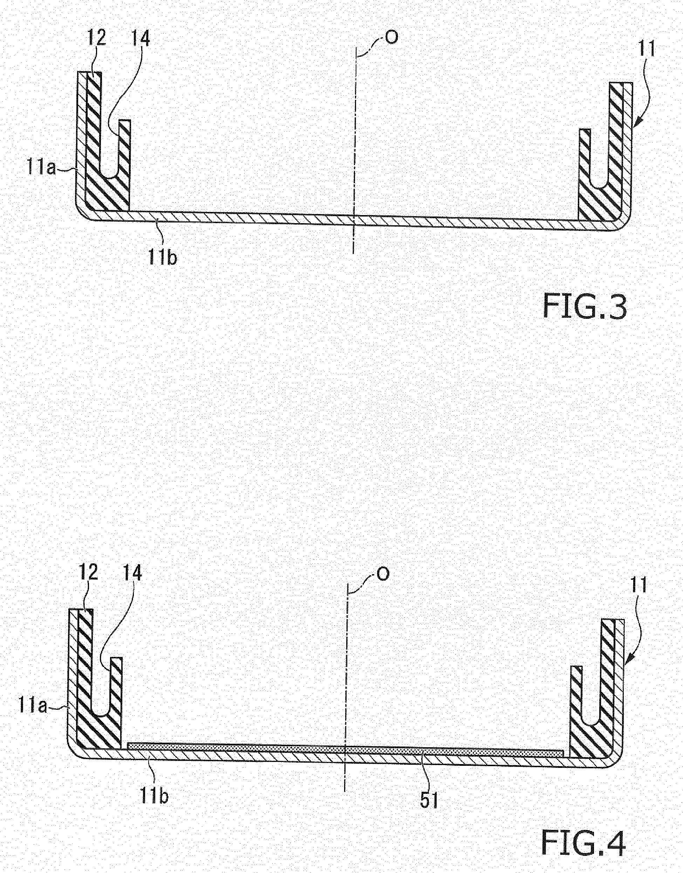

Next, the gasket 12 is set inside the peripheral wall portion 11a of the positive electrode container 11 (process of arranging the gasket) as shown in Fig. 3.

Subsequently, a thermosetting conductive material 51 formed in a paste state is applied to the area positioned inside the gasket 2 on the bottom wall portion 11b of the positive electrode container 11 (application process) as shown in Fig. 4. It is also preferable that the conductive material 51 is applied to the given area on the bottom wall portion 11b by using pad printing and so on in the application process.

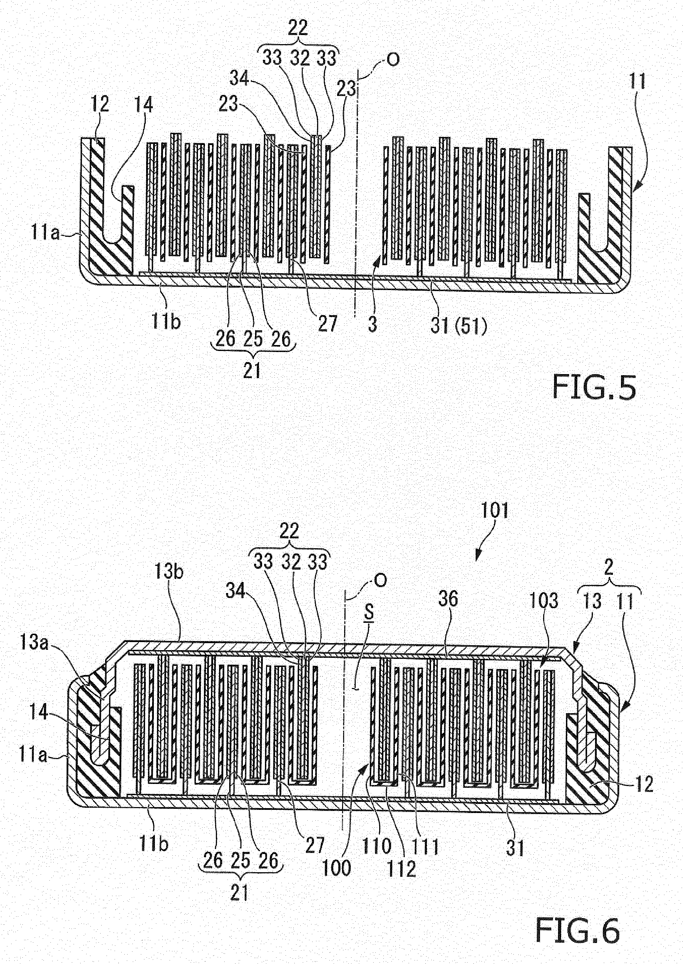

Then, the electrode group 3 is set inside the positive electrode container 11 (setting process) as shown in Fig. 5. Specifically, the electrode group 3 and the positive electrode container 11 are relatively moved to be close in the direction of the axis line O in a state where the positive electrode projecting portion 27 of the electrode group 3 faces the positive electrode container 11 in the direction of the axis line O, thereby allowing the lower end surface of the positive electrode projecting portion 27 to contact the conductive material 51.

After that, the conductive material 51 is heated to be cured (curing process) in a state where the lower end surface of the positive electrode projecting portion 27 contacts the conductive material 51. Accordingly, the positive electrode projecting portion 27 is adhered to the positive electrode container 11 through the conductive material 31. It is also preferable that the conductive material to be the conductive material 36 is applied in advance onto an upper end surface of the negative electrode projecting portion 34 (a contact surface with respect to the top wall portion 13b of the negative electrode container 13) prior to the setting process, and that the conductive material is cured with the conductive material 51 in the above curing process.

The conductive material is applied to the top wall portion 13b of the negative electrode container 13 in the same manner as the above application process, then, the conductive material is heated to be cured. Accordingly, the conductive material 36 is formed on the top wall portion 13b of the negative electrode container 13.

Subsequently, after the electrolyte is injected into the positive electrode container 11, the negative electrode container 13 is fixed to the positive electrode container 11. Specifically, after the peripheral wall portion 13a of the negative electrode container 13 is inserted into the groove portion 14 of the gasket 12, the peripheral wall portion 11a of the positive electrode container 11 is caulked toward the inside in the radial direction.

Accordingly, the negative electrode container 13 is fixed to the positive electrode container 11, and the above-described secondary battery 1 is completed.

As the conductive material 31 containing the carbon-based material is interposed between the positive electrode projecting portion 27 and the positive electrode container 11 in the embodiment as described above, the electric reliability can be secured and high-rate charge/discharge characteristics can be improved as compared with the case where the positive electrode projecting portion 27 is directly connected to the positive electrode container 11 as in the related art.

Moreover, as the structure in which the conductive material 31 merely contacts the positive electrode projecting portion 27 is adopted, the electric reliability can be secured while simplifying the structure as well as reducing the manufacturing man-hours and manufacturing costs as compared with the structure in which a tab separately formed from the positive electrode 21 is connected to the positive electrode container 11 by welding and so on.

As the negative electrode projecting portion 34 and the negative electrode container 13 are also connected through the conductive material 36 in the embodiment, the electric reliability can be further secured.

Furthermore, since it is not necessary to provide a space for connecting the tab in the negative electrode current collection sheet 32, the negative electrode current collection sheet 32 and the negative electrode mixture layers 33 can be arranged flush with each other on a contact surface (an upper end surface of the negative electrode 22) with respect to the negative electrode container 13 in the negative electrode 22. Accordingly, the area of the negative electrode mixture layers 33 can be secured as well as the area of the overlapping portion of the positive electrode 21 and the negative electrode 22 can be secured while maintaining the capacity of the exterior body 2, therefore, volumetric efficiency can be improved. Moreover, since the conductive auxiliary agent contained in the negative electrode mixture layers 33 also abuts on the top wall portion 13b of the negative electrode container 13 through the conductive material 36, the conductive state can be further improved.

In the method of manufacturing the secondary battery 1 according to the embodiment, the conductive material 51 is cured in the state where the positive electrode projecting portion 27 contacts the paste-state conductive material 51 applied to the positive electrode container 11 (bottom wall portion 11b). According to the structure, both the positioning of the electrode group 3 with respect to the positive electrode container 11 and the connection between the positive electrode projecting portion 27 and the conductive material 31 can be realized at the same time, therefore, the electric reliability can be secured while reducing the manufacturing man-hours and the manufacturing costs.

Though the structure in which the electrode group 3 and the negative electrode container 13 are assembled to the positive electrode container 11 in which the gasket 12 is set has been explained in the above embodiment, the present invention is not limited to the example. For example, it is also preferable that the electrode group 3 and the positive electrode container 11 are assembled to the negative electrode container 13 in which the gasket 12 is set by using the same method as the above manufacture method.

Specifically, first, the conductive material is applied onto the top wall portion 13b (application process) in the negative electrode container 13 in which the gasket 12 is set, then, the electrode group 3 is set inside the negative electrode container 13 so that the negative electrode projecting portion 34 contacts the conductive material (setting process). After that, the conductive material is cured (curing process) in a state where the negative electrode projecting portion 34 contacts the conductive material, and the electrolyte is injected into the negative electrode container 13. Then, after the positive electrode container 11 in which the conductive material 31 is previously formed on the bottom wall portion 11b is inserted to the gasket 12 from the outside, the peripheral wall portion 11a of the positive electrode container 11 is caulked toward the inside in the radial direction.

Also in this structure, the conductive material is cured in the state where negative electrode projecting portion 34 contacts the paste-state conductive material, therefore, both the positioning of the electrode group 3 with respect to the negative electrode container 13 and the connection between the negative electrode projecting portion 34 and the conductive material 36 can be realized at the same time. It is also preferable that the conductive material to be the conductive material 31 is applied in advance onto the contact surface of the positive electrode projecting portion 27 with respect to the bottom wall portion 11b of the positive electrode container 11 prior to the setting process, and that the conductive material in the negative electrode 22 is cured in the curing process.

### (Second Embodiment)

Next, a second embodiment of the present invention will be explained. The present embodiment differs from the above first embodiment in a point that a separator 100 has a negative electrode covering portion 112 which covers an end surface of the negative electrode 22 positioned in the positive electrode projecting portion 27 side. In the following explanation, the same symbols are added to the same structures as those of the above embodiment, and the explanation thereof is omitted.

Fig. 6 is a cross-sectional view of a secondary battery 101 according to the second embodiment.

In the secondary battery 101 shown in Fig. 6, the separator 100 of an electrode group 103 includes a first lap portion 110 and a second lap portion 111 arranged on both sides of the negative electrode 22 in the radial direction and the negative electrode covering portion 112 connecting lower end portions of these respective lap portions 110 and 111 as well as covering a lower end surface of the negative electrode 22 (end surface positioned in the positive electrode projecting portion 27 side) from a lower direction. The respective lap portions 110 and 111 are interposed in the overlapping portion between the positive electrode 21 and the negative electrode 22 to separate between the positive electrode 21 and the negative electrode 22.

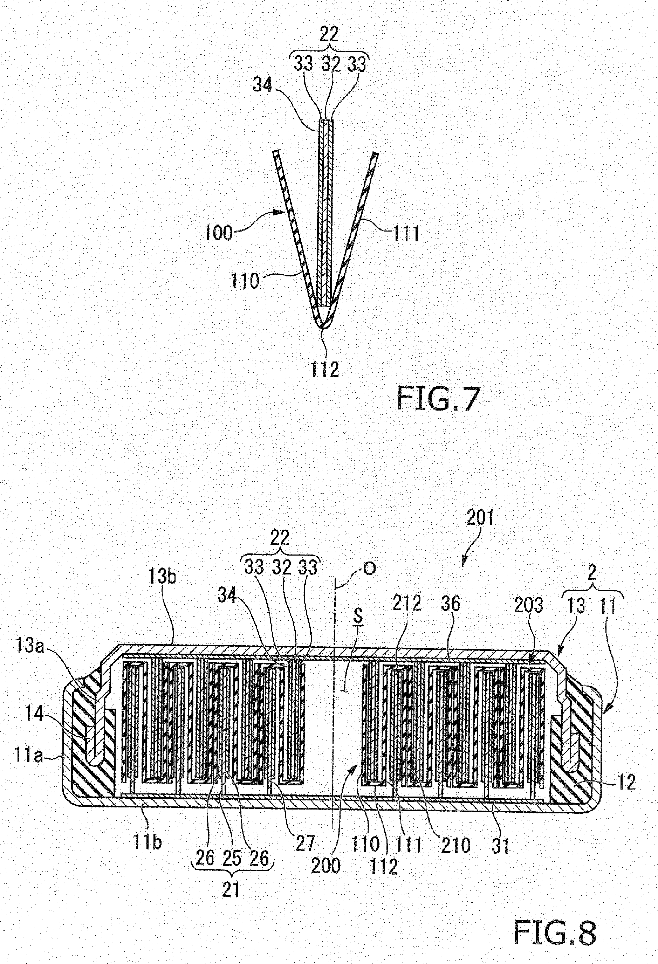

Fig. 7 is an explanatory view of a process of forming the electrode group, which is a cross-sectional view of the negative electrode 22 and the separator 100.

As shown in Fig. 7, in the process of forming the electrode group in the present embodiment, first, the separator 100 is folded in half in the width direction (direction of the axis line O) and the negative electrode 22 is set inside the folded portion. In this case, the folded portion forms the negative electrode covering portion 112 and portions positioned on both sides of the folded portion form the first lap portion 110 and the second lap portion 111 in the separator 100. In this state, the positive electrode 21 is stacked on the second lap portion 111 of the separator 100 so as to be shifted with respect to the negative electrode 22 in the direction of the axis line O, and the negative electrode 22, the separator 100 and the positive electrode 21 are wound. Accordingly, the above electrode group 103 is formed.

As the negative electrode covering portion 112 which covers the end surface of the negative electrode 22 positioned in the positive electrode projecting portion 27 is included in the present embodiment, a short circuit between the positive electrode 21 and the negative electrode 22 can be positively suppressed. In particular, it is possible to suppress a short circuit between the positive electrode projecting portion 27 and the negative electrode 22 through the conductive material 51 (conductive material 31) in the connection work (the setting process and the curing process) and so on between the positive electrode projecting portion 27 and the conductive material 31. In the above embodiment, the case where a piece of the separator 100 is folded and the folded portion forms the negative electrode covering portion 112 has been explained, however, the present invention is not limited to this. For example, it is also preferable that one end portions of two separators in the width direction are connected by welding and so on, and the connected portion is used as the negative electrode covering portion 112.

### (Third Embodiment)

Next, a third embodiment of the present invention will be explained. The present embodiment differs from the above embodiments in a point that a separator 200 has a positive electrode covering portion 212 which covers an end surface of the positive electrode 21 positioned in the negative electrode projecting portion 34 side. In the following explanation, the same symbols are added to the same structures as those of the above embodiment, and the explanation thereof is omitted.

Fig. 8 is a cross-sectional view of a secondary battery 201 according to the third embodiment.

In the secondary battery 201 shown in Fig. 8, the separator 200 of an electrode group 203 includes the first lap portion 110, the second lap portion 111 and the negative electrode covering portion 112, and further, a third lap portion 210 arranged outside the positive electrode 21 in the radial direction, which is positioned in an outer periphery with respect to the negative electrode 22 in the electrode group 203 and a positive electrode covering portion 212 connecting upper end portions of the second lap portion 111 and the third lap portion 210.

The positive electrode covering portion 212 covers an upper end surface (end surface positioned in the negative electrode projecting portion 34 side) of the positive electrode 21 from an upper direction.

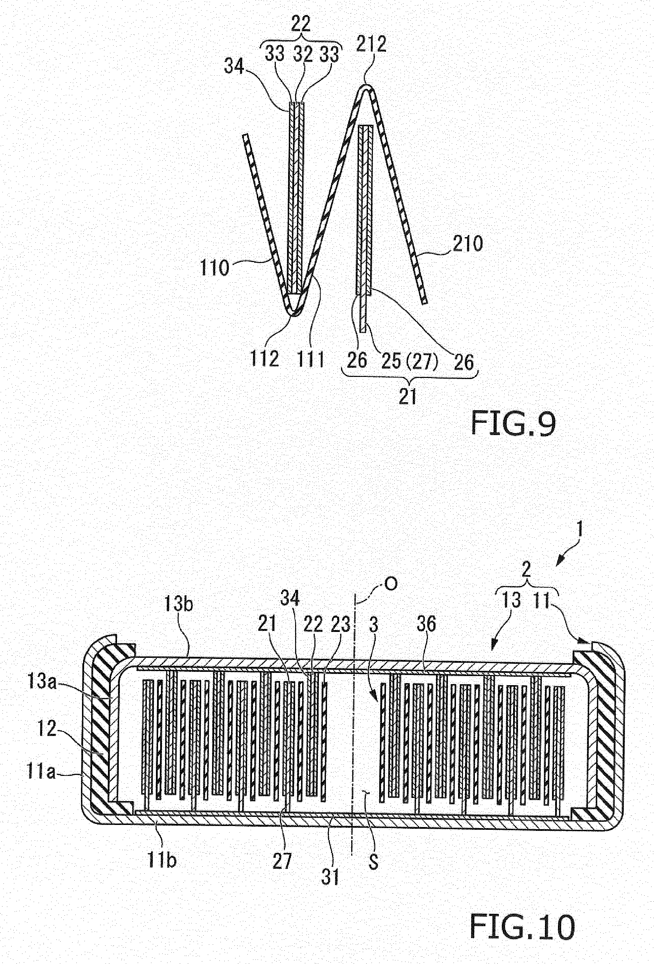

Fig. 9 is an explanatory view of a process of forming the electrode group, which is a cross-sectional view of a laminate (the positive electrode 21, the negative electrode 22 and the separator 200).

As shown in Fig. 9, in the process of forming the electrode group in the present embodiment, first, the separator 200 is folded in three equal parts in the width direction, and the negative electrode 22 is set inside one folded portion, and the positive electrode 21 is set inside the other folded portion in a state of being shifted with respect to the negative electrode 22 in the direction of the axis line O. In this case, one folded portion forms the negative electrode covering portion 112 and the other folded portion forms the positive electrode covering portion 212 in the separator 200. Portions connecting to respective folded portions form the first lap portion 110, the second lap portion 111 and the third lap portion 210 respectively. The electrode group 203 is formed by winding the negative electrode 22, the separator 200 and the positive electrode 21 in this state. In this case, in the separator 200, the third lap portion 210 positioned in an inner (or outer) peripheral side and the first lap portion 110 positioned in an outer (or inner) peripheral side overlap so as to interpose the positive electrode 21 and the negative electrode 22.

According to the above structure, the same operation and effect as the above second embodiment can be obtained, and a short circuit between the positive electrode 21 and the negative electrode 22 can be positively suppressed as the positive electrode covering portion 212 which covers the end surface of the positive electrode 21 positioned in the negative electrode projecting portion 34 side is included. In the above embodiment, the case where a piece of the separator 200 is folded and the folded portions respectively form the negative electrode covering portion 112 and the positive electrode covering portion 212 has been explained, however, the present invention is not limited to this. For example, it is also preferable that end portions of plural pieces of separators in the width direction are connected by welding and so on, and the connected portions are formed as the negative electrode covering portion 112 and the positive electrode covering portion 212.

The technical scope of the present invention is not limited to the above embodiments, and various modifications may occur within the scope of the present invention as defined by the appended claims.

For example, the structure in which the conductive materials 31 and 36 are respectively interposed between the positive electrode 21 and the positive electrode container 11 and between the negative electrodes 22 and the negative electrode container 13 has been explained in the above embodiments, however, the present invention is not limited to this. The structure in which at least the conductive material 31 is interposed between the positive electrode 21 and the positive electrode container 11 can be adopted.

The structure in which the conductive material 51 is cured in the state where the paste-state conductive material 51 applied to the positive electrode container 11 contacts the positive electrode projecting portion 27 has been explained in the above embodiments, however, the present invention is not limited to this. For example, the conductive materials may be formed in the positive electrode container 11 and the positive electrode projecting portion 27 respectively by application and so on, then, the positive electrode container 11 may be allowed to contact the positive electrode projecting portion 27 through both conductive materials. Moreover, the conductive material may be formed in any one of the positive electrode container 11 and the positive electrode projecting portion 27, then, the positive electrode container 11 may be allowed to contact the positive electrode projecting portion 27 through the conductive material.

For example, when the conductive material is formed only in the positive electrode projecting portion 27, the application area of the conductive material can be reduced as compared with the case of forming the conductive material in the entire area facing the electrode group 3 in the positive electrode container 11 (bottom wall portion 11b), therefore, manufacturing costs can be further reduced.

On the other hand, in the case where the conductive material is formed in (substantially) the entire area facing the electrode group 3 in the positive electrode container 11 (bottom wall portion 11b), positional deviation of the electrode group 3 with respect to the positive electrode container 11 in the radial direction is allowed and the electric reliability between the two can be secured as well. It is also possible that the conductive material is formed in any one of the negative electrode container 13 and the negative electrode projecting portion 34 in the same manner as the positive electrode 21 side and that the negative electrode container 13 is allowed to contact the negative electrode projecting portion 34 through the conductive material.

Though the structure in which the paste-state conductive material is used as the conductive material has been explained in the above embodiments, the present invention is not limited to this. For example, a solid-state conductive material may be arranged at least between the positive electrode container 11 and the positive electrode projecting portion 27.

Moreover, the structure in which the upper end surfaces of the negative electrode current collection sheet 32 and the negative electrode mixture layers 33 are arranged flush with each other in the negative electrode 22 has been explained in the above embodiments, however, the present invention is not limited to this. That is, the negative electrode current collection sheet 32 may project from the negative electrode mixture layers 33 and the projecting portion may be used as the negative electrode projecting portion 34.

Furthermore, it is also preferable that the positive electrode current collection sheet 25 and positive electrode mixture layers 26 are arranged flush with each other in the lower end surface of the positive electrode projecting portion 27 (the contact surface with respect to the bottom wall portion 11b of the positive electrode container 11). In this case, the conductive auxiliary agent contained in the positive electrode mixture layers 26 also abuts on the bottom wall portion 11b of the positive electrode container 11 through the conductive material 31, therefore, a better conductive state can be obtained.

Though the case where the electrode group is formed by winding the positive electrode 21, the negative electrode 22 and the separator 23 in the stacked state has been explained in the above embodiment, the present invention is not limited to this. That is, the structure in which the positive electrode 21, the negative electrode 22 and the separator 23 are stacked and are connected separately to the positive electrode container and the negative electrode container through the projecting portions projecting from the overlapping portions in the positive electrode 21 and the negative electrode 22 may be adopted.

The exterior body 2 can be changed in the design appropriately as long as it has the structure in which the positive electrode container 11 and the negative electrode container 13 house the electrode group 3 in cooperation with each other. For example, a structure in which the entire peripheral wall portion 13a of the negative electrode container 13 is surrounded by the peripheral wall portion 11a of the positive electrode container 11 as shown in Fig. 10 may be adopted.

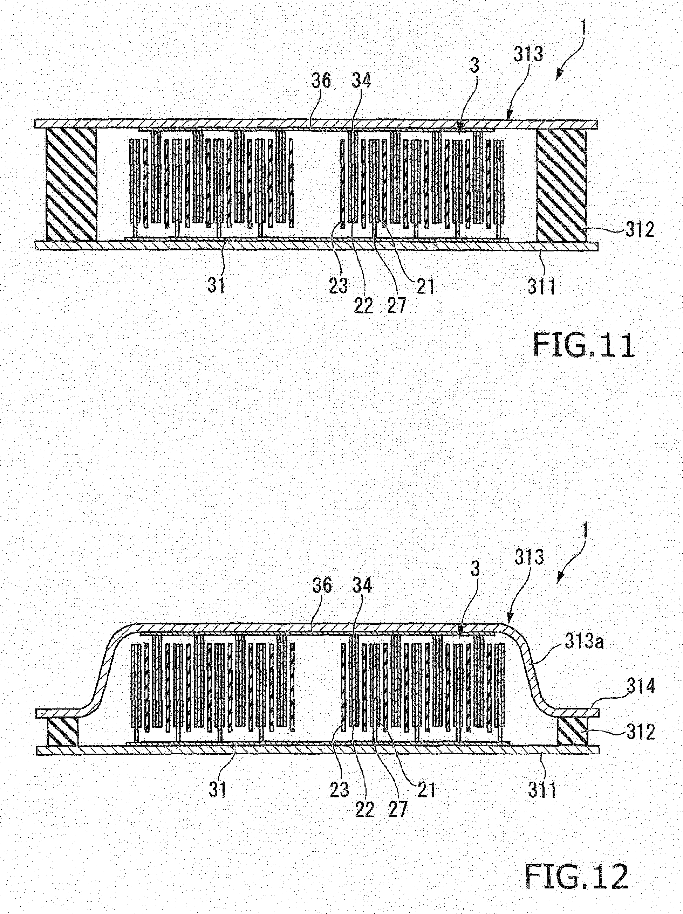

Moreover, a structure in which both a positive electrode container 311 and a negative electrode container 313 have a flat plate shape and outer peripheral portions thereof are connected by a gasket 312 as shown in Fig. 11 may be adopted.

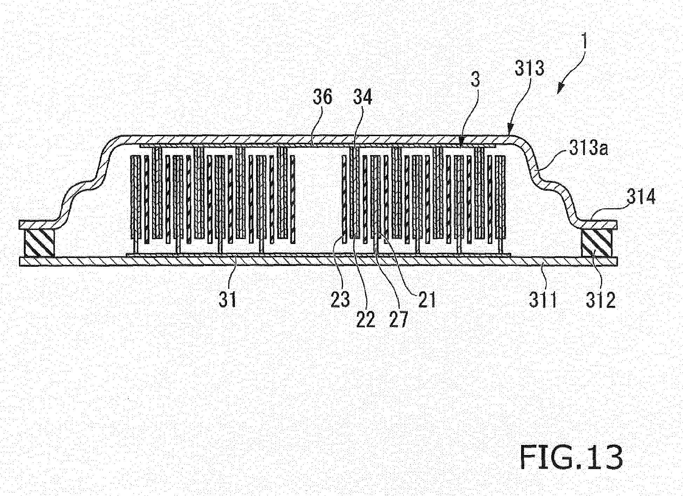

Furthermore, a structure in which the positive electrode container 311 is formed in a flat plate shape, the negative electrode container 313 is formed in a bottomed cylindrical shape, and a flange portion 314 projecting from a peripheral wall portion 313a of the negative electrode container 313 and an outer peripheral portion of the positive electrode container 311 are connected by the gasket 312 as shown in Fig. 12 may be adopted. It is also possible that the peripheral portion 313a of the negative electrode container 313 is formed in a multistage shape so that the inner diameter is increased as going downward as shown in Fig. 13.

Though the nonaqueous electrolyte secondary battery has been explained as an example of an electrochemical cell in the above embodiment, the present invention can be applied to an electric double-layer capacitor or a primary battery. Materials used for respective electrodes and the electrolyte can be changed appropriately.

Additionally, it is possible to replace the components in the above embodiments with well-known components within the scope of the present invention as defined by the claims, and respective modification examples may be combined appropriately.

## Claims

1. An electrochemical cell (1) comprising:
an electrode group (3) in which a positive electrode (21) and a negative electrode (22) are overlapped through a separator (23);
a positive electrode container (11) to which a positive electrode projecting portion (27) of the positive electrode which projects from an overlapping portion with respect to the negative electrode is electrically connected; and
a negative electrode container (13) to which a negative electrode projecting portion (34) of the negative electrode which projects from the overlapping portion is electrically connected as well as demarcating a housing space (S) which houses the electrode group with the positive electrode container,
wherein central axis lines of the positive electrode container and the negative electrode container are positioned on a common axis which is hereinafter referred to as the axis line (0), and
the electrode group is configured by winding a laminate including a sheet-like positive electrode (21), a negative electrode (22) and a separator (23, 100, 200) arranged on both sides of the negative electrode, which is housed inside the housing space in a state where a winding axis is coaxially arranged with the axis line,
**characterized in that**:
the positive and negative electrodes are shifted relative to one another along the direction of the axis line, whereby the positive electrode projecting portion (27) is formed; and
an end surface of the positive electrode projecting portion (27) abuts a bottom wall (11b) portion of the positive electrode container (11) through a first conductive material (31) containing a carbon-based material.

2. The electrochemical cell according to claim 1,
wherein the first conductive material is arranged on a contact surface of the positive electrode projecting portion with respect to the positive electrode container.

3. The electrochemical cell according to claim 1 or 2,
wherein the first conductive material is arranged over the entire area of a surface (11b) in the positive electrode container, which faces the positive electrode projecting portion in the electrode group.

4. The electrochemical cell according to any one of the preceding claims,
wherein a second conductive material (36) containing a carbon-based material is interposed between the negative electrode projecting portion (34) and the negative electrode container (13).

5. The electrochemical cell according to any one of the preceding claims,
wherein the separator includes a lap portion (110, 111) overlapping with the positive electrode and the negative electrode, and a negative electrode covering portion (112) which covers an end portion of the negative electrode positioned in the positive electrode projecting portion's side.

6. The electrochemical cell according to any one of the preceding claims,
wherein the separator includes a positive electrode covering portion (212) which covers an end portion of the positive electrode in the negative electrode projecting portion's side.

7. The electrochemical cell according to any one of the preceding claims,
wherein the negative electrode includes a negative electrode current collection sheet (32), and a pair of negative electrode mixture layers (33) applied to both surfaces of the negative electrode current collection sheet, in which the negative electrode current collection sheet and the negative electrode mixture layers are arranged flush with each other in a contact surface of the negative electrode with respect to the negative electrode container.

8. A method of manufacturing the electrochemical cell according to any one of the preceding claims, the method comprising the steps of:
applying the first conductive material (51) in a paste state onto a contact surface of the positive electrode container with respect to the positive electrode projecting portion;
setting the electrode group (3) inside the positive electrode container in a state where the positive electrode projecting portion contacts the first conductive material; and
curing the first conductive material.

9. A method of manufacturing the electrochemical cell according to any one of claims 4 to 7, the method comprising the steps of:
applying a second conductive material in a paste state onto a contact surface of the negative electrode container with respect to the negative electrode projecting portion;
setting the electrode group inside the negative electrode container in a state where the negative electrode projecting portion contacts the second conductive material; and
curing the second conductive material.

## Patentansprüche

1. Elektrochemische Zelle (1), umfassend:
eine Elektrodengruppe (3), in der eine positive Elektrode (21) und eine negative Elektrode (22) durch einen Separator (23) überlappt sind;
einen positiven Elektrodenbehälter (11), mit dem ein positiver Elektrodenfortsatzabschnitt (27) der positiven Elektrode, der sich von einem Überlappungsabschnitt in Bezug auf die negative Elektrode fortsetzt, elektrisch verbunden ist; und
einen negativen Elektrodenbehälter (13), mit dem ein negativer Elektrodenfortsatzabschnitt (34) der negativen Elektrode, der sich vom Überlappungsabschnitt fortsetzt, elektrisch verbunden ist, wie auch einen Gehäuseraum (S) abgrenzt, der die Elektrodengruppe mit dem positiven Elektrodenbehälter beherbergt,
wobei Mittelachslinien des positiven Elektrodenbehälters und des negativen Elektrodenbehälters auf einer gemeinsamen Achse positioniert sind, die nachfolgend als die Achslinie (0) bezeichnet ist, und
die Elektrodengruppe durch Wickeln eines Laminats konfiguriert ist, das eine blattähnliche positive Elektrode (21), eine negative Elektrode (22) und einen Separator (23, 100, 200), der an beiden Seiten der negativen Elektrode angeordnet ist, enthält, das innerhalb des Gehäuseraums in einem Zustand beherbergt ist, in dem eine Wickelachse koaxial mit der Achslinie angeordnet ist,
**dadurch gekennzeichnet, dass**:
die positive und negative Elektrode relativ zueinander entlang der Richtung der Achslinie verschoben sind, wodurch der positive Elektrodenfortsatzabschnitt (27) gebildet wird; und
eine Stirnfläche des positiven Elektrodenfortsatzabschnitts (27) an einem Bodenwand-(11b) Abschnitt des positiven Elektrodenbehälters (11) durch ein erstes leitfähiges Material (31), das ein karbonbasiertes Material beinhaltet, anliegt.

2. Elektrochemische Zelle nach Anspruch 1,
wobei das erste leitfähige Material auf einer Kontaktfläche des positiven Elektrodenfortsatzabschnitts in Bezug auf den positiven Elektrodenbehälter angeordnet ist.

3. Elektrochemische Zelle nach Anspruch 1 oder 2,
wobei das erste leitfähige Material über der gesamten Fläche Areal einer Oberfläche (11b) im positiven Elektrodenbehälter, die zum positiven Elektrodenfortsatzabschnitt in der Elektrodengruppe zeigt, angeordnet ist.

4. Elektrochemische Zelle nach einem der vorangehenden Ansprüche,
wobei ein zweites leitfähiges Material (36), das ein karbonbasiertes Material beinhaltet, zwischen dem negativen Elektrodenfortsatzabschnitt (34) und dem negativen Elektrodenbehälter (13) eingefügt ist.

5. Elektrochemische Zelle nach einem der vorangehenden Ansprüche,
wobei der Separator einen Überlappungsabschnitt (110, 111), der mit der positiven Elektrode und der negativen Elektrode überlappt, und einen negativen Elektrodenabdeckungsabschnitt (112), der einen Endabschnitt der negativen Elektrode abdeckt, der in der Seite des positiven Elektrodenfortsatzabschnitts positioniert ist, enthält.

6. Elektrochemische Zelle nach einem der vorangehenden Ansprüche,
wobei der Separator einen positiven Elektrodenabdeckungsabschnitt (212) enthält, der einen Endabschnitt der positiven Elektrode in der Seite des negativen Elektrodenfortsatzabschnitts abdeckt.

7. Elektrochemische Zelle nach einem der vorangehenden Ansprüche,
wobei die negative Elektrode eine negative Elektrodenstromsammelplatte (32) und ein Paar von negativen Elektrodenmischschichten (33), die auf beide Oberflächen der negativen Elektrodenstromsammelplatte aufgetragen sind, umfasst, in der die negative Elektrodenstromsammelplatte und die negativen Elektrodenmischschichten in einer Kontaktfläche der negativen Elektrode in Bezug auf den negativen Elektrodenbehälter bündig miteinander angeordnet sind.

8. Verfahren zur Herstellung der elektrochemischen Zelle nach einem der vorangehenden Ansprüche, das Verfahren umfassend die Schritte:
Auftragen des ersten leitfähigen Materials (51) in einem Pastenzustand auf eine Kontaktfläche des positiven Elektrodenbehälters in Bezug auf den positiven Elektrodenfortsatzbehälter;
Versetzen der Elektrodengruppe (3) innerhalb des positiven Elektrodenbehälters in einen Zustand, in dem der positive Elektrodenfortsatzabschnitt das erste leitfähige Material kontaktiert; und
Härten des ersten leitfähigen Materials.

9. Verfahren zur Herstellung der elektrochemischen Zelle nach einem der Ansprüche 4 bis 7, das Verfahren umfassend die Schritte:
Auftragen eines zweiten leitfähigen Materials in einem Pastenzustand auf eine Kontaktfläche des negativen Elektrodenbehälters in Bezug auf den negativen Elektrodenfortsatzabschnitt;
Versetzen der Elektrodengruppe innerhalb des negativen Elektrodenbehälters in einen Zustand, in dem der negative Elektrodenfortsatzabschnitt das zweite leitfähige Material kontaktiert; und
Härten des zweiten leitfähigen Materials.

## Revendications

1. Cellule électrochimique (1) comprenant :
un groupe d'électrodes (3) dans lequel une électrode positive (21) et une électrode négative (22) se chevauchent via un séparateur (23) ;
un conteneur d'électrode positive (11) auquel une partie en saillie d'électrode positive (27) de l'électrode positive qui est en saillie à partir d'une partie de chevauchement par rapport à l'électrode négative est connectée électriquement ; et
un conteneur d'électrode négative (13) auquel une partie en saillie d'électrode négative (34) de l'électrode négative qui est en saillie à partir de la partie de chevauchement est connectée électriquement ainsi que délimite un espace de logement (S) qui loge le groupe d'électrodes avec le conteneur d'électrode positive,
dans lequel des lignes d'axe centrales du conteneur d'électrode positive et du conteneur d'électrode négative sont positionnées sur un axe commun auquel on se réfère ci-après en tant que la ligne d'axe (0), et
le groupe d'électrodes est configuré en enroulant un stratifié comprenant une électrode positive (21) semblable à une feuille, une électrode négative (22) et un séparateur (23, 100, 200) disposé des deux côtés de l'électrode négative, lequel est logé à l'intérieur de l'espace de logement dans un état où un axe d'enroulement est disposé coaxialement à la ligne d'axe,
**caractérisée en ce que** :
les électrodes positive et négative sont décalées l'une par rapport à l'autre le long de la direction de la ligne d'axe, moyennant quoi la partie en saillie d'électrode positive (27) est formée ; et
une surface d'extrémité de la partie en saillie d'électrode positive (27) jouxte une partie de paroi inférieure (11b) du conteneur d'électrode positive (11) via un premier matériau conducteur (31) contenant un matériau à base de carbone.

2. Cellule électrochimique selon la revendication 1,
dans laquelle le premier matériau conducteur est disposé sur une surface de contact de la partie en saillie d'électrode positive par rapport au conteneur d'électrode positive.

3. Cellule électrochimique selon la revendication 1 ou 2,
dans laquelle le premier matériau conducteur est disposé sur toute la superficie d'une surface (11b) dans le conteneur d'électrode positive, laquelle fait face à la partie en saillie d'électrode positive dans le groupe d'électrodes.

4. Cellule électrochimique selon l'une quelconque des revendications précédentes,
dans laquelle un deuxième matériau conducteur (36) contenant un matériau à base de carbone est intercalé entre la partie en saillie d'électrode négative (34) et le conteneur d'électrode négative (13).

5. Cellule électrochimique selon l'une quelconque des revendications précédentes,
dans laquelle le séparateur comprend une partie de chevauchement (110, 111) en chevauchement avec l'électrode positive et l'électrode négative, et une partie de recouvrement d'électrode négative (112) qui recouvre une partie d'extrémité de l'électrode négative positionnée du côté de la partie en saillie d'électrode positive.

6. Cellule électrochimique selon l'une quelconque des revendications précédentes,
dans laquelle le séparateur comprend une partie de recouvrement d'électrode positive (212) qui recouvre une partie d'extrémité de l'électrode positive du côté de la partie en saillie d'électrode négative.

7. Cellule électrochimique selon l'une quelconque des revendications précédentes,
dans laquelle l'électrode négative comprend une feuille de collecte de courant d'électrode négative (32) et une paire de couches de mélange d'électrode négative (33) appliquées sur les deux surfaces de la feuille de collecte de courant d'électrode négative, dans laquelle la feuille de collecte de courant d'électrode négative et les couches de mélange d'électrode négative sont disposées en affleurement les unes avec les autres dans une surface de contact de l'électrode négative par rapport au conteneur d'électrode négative.

8. Procédé de fabrication de la cellule électrochimique selon l'une quelconque des revendications précédentes, le procédé comprenant les étapes suivantes :
l'application du premier matériau conducteur (51) dans un état pâteux sur une surface de contact du conteneur d'électrode positive par rapport à la partie en saillie d'électrode positive ;
le placement du groupe d'électrodes (3) à l'intérieur du conteneur d'électrode positive dans un état où la partie en saillie d'électrode positive entre en contact avec le premier matériau conducteur ; et
le traitement du premier matériau conducteur.

9. Procédé de fabrication de la cellule électrochimique selon l'une quelconque des revendications 4 à 7, le procédé comprenant les étapes suivantes :
l'application d'un deuxième matériau conducteur dans un état pâteux sur une surface de contact du conteneur d'électrode négative par rapport à la partie en saillie d'électrode négative ;
le placement du groupe d'électrodes à l'intérieur du conteneur d'électrode négative dans un état où la partie en saillie d'électrode négative entre en contact avec le deuxième matériau conducteur ; et
le traitement du deuxième matériau conducteur.
